# EUROPÄISCHE PATENTANMELDUNG

(11) **EP 1 034 921 A2**
(43) Veröffentlichungstag der Anmeldung: **13.09.2000**
(21) Anmeldenummer: 00104029.4
(22) Anmeldetag: 26.02.2000
(51) Int. Cl.: B32B 15/14, B32B 27/12, B32B 5/26, B64C 1/00, F01D 5/28

(54) **Schichtstruktur und Verfahren zu ihrer Herstellung**

(30) Priorität: 05.03.1999 DE 19909675
(71) Anmelder: MTU MOTOREN- UND TURBINEN-UNION MÜNCHEN GMBH, 80995 München (DE)
(72) Erfinder: Sikorski, Siegfried, 80997 München (DE); Schönacher, Reinhold, 80999 München (DE); Schober, Michael, 80999 München (DE)

(57) **Zusammenfassung**

Die Erfindung betrifft eine Schichtstruktur (1), aus wenigstens einer Schicht aus faserverstärktem Kunststoff (3) als Substrat (2) und einer Deckschicht (4), die benachbart zu der Schicht (3) aus faserverstärktem Kunststoff metallische Fasern und/oder Fäden (6) aufweist, wobei die Schicht aus faserverstärktem Kunststoff (3) und die metallischen Fasern und/oder Fäden (6) mit Bindemittel getränkt sind, und wobei die Deckschicht (4) wenigstens abschnittsweise ein mit den metallischen Fasern und/oder Fäden (6) verbundenes Blech (7) als äußere Oberfläche (8) aufweist und mehrere Schichten (5) aus metallischen Fasern und/oder Fäden (6) umfasst, deren Porosität zu der Schicht aus faserverstärktem Kunststoff (3) hin zunimmt.

## Beschreibung

Die Erfindung betrifft eine Schichtstruktur für Anwendungen bei erosionsgefährdeten Bauteilen, aus wenigstens einer Schicht aus faserverstärktem Kunststoff als Substrat und einer Deckschicht, die benachbart zu der Schicht aus faserverstärktem Kunststoff wenigstens eine Schicht aus metallischen Fasern und/oder Fäden aufweist, wobei die Schicht aus faserverstärktem Kunststoff und die metallische Fasern und/oder Fäden mit Bindemittel getränkt sind, sowie ein Verfahren zu ihrer Herstellung.

Schichtstrukturen in Faserverbundbauweise verbinden die Vorteile eines geringen Gewichts sowie einer ausreichenden Festigkeit. Bei strömungsmechanischer Beaufschlagung, wie z.B. in einer Fluidströmung einer Strömungsmaschine, sind derartige Schichtstrukturen aufgrund abrasiver Partikel im Fluidstrom sowie die thermische Beanspruchung gegen Erosion zu schützen.

Aus der DE-PS 42 08 842 ist ein Erosionsschutz für Hubschrauberrotorblätter aus faserverstärkten Kunststoffmaterialien bekannt, bei dem das Rotorblatt an den kritischen Stellen mit einem aufgeklebten Blech belegt und dieses mit Partikeln aus Metallverbindungen beschichtet ist. Problematisch hierbei ist jedoch die Haftbeständigkeit des aufgeklebten Bleches mit der darunterliegenden Faserverbundstruktur.

Die DE 196 27 860 C1 offenbart eine Schaufel für eine Strömungsmaschine und ein Verfahren zu ihrer Herstellung, bei der wenigstens abschnittsweise Schichten aus faserverstärkten Kunststoff mit einer Deckschicht aus metallischen Fasern oder Fäden geschützt ist und über das gleiche Kunstharzbindemittel wie die Schichten aus faserverstärktem Kunststoff verbunden sind. Auf diese Weise wird die gewünschte hohe Haftfähigkeit der Deckschicht auf dem darunter befindlichen Schichten aus faserverstärktem Kusntstoff gewährleistet. Es ist jedoch wünschenswert, insbesondere die Abriebsfestigkeit sowie die Erosionsbeständigkeit einer solchen Struktur für hohe Belastungen weiter zu verbessern.

Aus der DE 196 42 983 A1 ist ein Schichtkörper mit einem Substrat sowie ein Verfahren zu seiner Herstellung bekannt, welcher wenigstens eine Faserschicht und eine daran anschließende Deckschicht enthält, die wenigstens zur Faserschicht benachbart metallische Fasern oder Fäden aufweist, welche ebenso wie die Faserschicht mit einem Bindemittel getränkt sind, wobei in die Deckschicht im Bereich der metallischen Fasern oder Fäden zur Verbesserung der Abriebfestigkeit Partikel eingelagert sind. Ein solcher Schichtkörper ist jedoch im Hinblick auf seine Haftfähigkeit für darauf aufzubringende Funktionsschichten, die das Matrixharz nicht chemisch oder physikalisch angreifen dürfen, weiter zu verbessern.

Aus der DE-OS 19 00 477 ist ein Verbundteil bekannt, das eine Schicht aus faserverstärktem Kunststoff und einem metallischen Träger umfasst, auf dessen Oberfläche eine Schicht aus Metallfasern in Form von Matten, Vliesen oder Geweben geschweißt oder gelötet ist, wobei die Metallfasern eine formschlüssige Verbindung mit dem Kunststoff eingehen und zusammen mit den Kunststoff getränkt sind.

Die Aufgabe der vorliegenden Erfindung besteht darin, eine Schichtstruktur der eingangs beschriebenen Gattung so zu verbessern, daß deren Oberfläche als Funktionsoberfläche genutzt werden kann und z.B. einen guten Haftgrund für Funktionsschichten bildet und das darunter befindliche Matrixharz sowohl beim Aufbringen als auch beim Entfernen der Funktionsschichten od.dgl. geschützt ist. Zudem soll das Eindringen des Bindemittels erleichtert, so die Haftung der Deckschicht an dem Substrat aus faserverstärktem Kunststoff verbessert werden und ein Verfahren zur Herstellung einer derartigen Schichtstruktur geschaffen werden.

Die Lösung der Aufgabe im Hinblick auf die Schichtstruktur ist erfindungsgemäß dadurch gekennzeichnet, daß die Deckschicht wenigstens abschnittsweise ein mit den metallischen Fasern und/oder Fäden verbundenes Blech als flächige, äußere Oberfläche bzw. Außenfläche, die je nach Konstruktion auch eine innere bzw. nach innen gewandte Außenfläche sein kann (z.B. bei einem Rohr), aufweist und mehrere Schichten aus metallischen Fasern und/oder Fäden umfasst, deren Porosität zu der Schicht aus faserverstärktem Kunststoff hin zunimmt.

Als vorteilhaft erweist sich dabei, daß das mit den metallischen Fasern und/oder Fäden verbundene Blech durch die Verklammerung der metallischen Fasern und/oder Fäden mit der Schicht aus faserverstärktem Kunststoff infolge des Bindemittels im Vergleich zu auf faserverstärkten Kunststoffsubstraten aufgeklebten Blechen eine hohe Haftfähigkeit aufweist. Darüber hinaus bietet die Schichtstruktur mit dem Blech als äußerer Oberfläche einen guten Haftgrund für Funktionsschichten, die z.B. thermisch aufgespritzt oder galvanisch abgeschieden werden können, wobei die Matrix unterhalb des Bleches gegen chemische oder physikalische Angriffe geschützt ist.

Eine als Blech ausgebildete äußere Oberfläche schützt die Schichtstruktur und insbesondere ihre Matrix zu den beim Reinigen oder Entlacken mit Chemikalien oder Heißdampf flächig gegen das Eindringen von Flüssigkeiten oder Gasen. Überdies verhindert das Blech bei Feuer- oder Hitzeeinwirkung einen direkten Kontakt mit der Matrix und deren ggf. damit verbundene Überhitzung und/oder Zersetzung. Schließlich kann das Blech als Funktionsoberfläche strukturiert werden und z.B. eine sog. Haifischhaut zur Widerstandsverringerung bei Bauteilen von Flugzeugen, z.B. am Rumpf oder an den Tragflächen, eingeprägt werden.

In einer Ausgestaltung sind das Blech und die metallischen Fasern und/oder Fäden durch Sintern oder Löten miteinander verbunden, wodurch sich die Deckschicht gut haftend an das Substrat aus wenigstens einer Schicht aus faserverstärktem Kunststoff anbinden läßt. Durch das Sintern sind die metallischen Fasern und/oder Fäden miteinander verschweißt bzw. verschmolzen und können durch äußere Belastungen selbst bei Rissen im Matrixharz nicht leicht getrennt werden, wie z.B. bei Druck auf die vom Blech gebildete äußere Oberfläche (z.B. bei Kurbelwellen), Schlägen durch Fremdkörper (Steine), Handhabungsfehlern bei der Montage oder Zusammenstößen von Flugzeugen und sonstigen Fahrzeugen (z.B. Wartungsfahrzeugen gegen Flugzeugrumpf).

Das Blech und die metallischen Fasern und/oder Fäden können aus Materialien mit nah beieinanderliegenden bzw. ähnlichen Schmelztemperaturen bestehen, wobei die Materialien bspw. Legierungen aus Titan oder Stahl oder Nickel sein können.

In einer weiteren Ausgestaltung kann die Deckschicht zwei zueinander beabstandete und mit dazwischen angeordneten, metallischen Fasern und/oder Fäden verbundene Bleche aufweisen, von denen das äußere Blech die äußere Oberfläche der Schichtstruktur bildet, wobei im Bereich zwischen den Blechen Leitungen für Kühlmittel vorgesehen sein können.

Zur Erzielung einer hohen Haftfähigkeit der Deckschicht auf dem darunterliegenden Substrat können die das Substrat bildende Schicht aus faserverstärktem Kunststoff und die zur Deckschicht gehörenden metallischen Fasern und/oder Fäden mit dem gleichen Bindemittel getränkt und verbunden sein, wobei das Bindemittel Mischpolymerisate aus Kunststoffharz, z.B. Epoxy-, Phenolharze oder Polyimide, enthalten kann.

Die metallischen Fasern und/oder Fäden können als Filz und/oder Geflecht und/oder Gewebe vorliegen, wobei z.B. beim Filz vorteilhaft ist, daß der ungerichtete Verbund der Fasern des Filzes ein elastisches Auslenken der von einem Fremdkörper getroffenen Fasern erlaubt, so daß die Gefahr des Faserrisses reduziert ist. Sollte es gleichwohl zu einem Faserriß kommen, so bleibt die Schädigung lokal begrenzt, da die Faser eines Filzes nicht wie bei einem Gewebe durch die ganze Schicht hindurchläuft, sondern von begrenzter Länge ist.

Die Deckschicht umfasst unterhalb des Bleches mehrere Schichten aus metallischen Fasern und/oder Fäden, wobei die Porosität der Schichten aus metallischen Fasern und/oder Fäden zu der Schicht aus faserverstärktem Kunststoff sukzessive bzw. schichtweise hin zunimmt, um das Eindringen und Tränken des Bindemittels bzw. Matrixharzes zu erleichtern und die Haftung des Bleches zu verbesssern, und z.B. außen bei etwa 95% liegt.

Die Deckschicht kann an mehreren Seiten des Substrats ausgebildet sein und das Substrat im wesentlichen vollständig umgeben.

Die Lösung der Aufgabe im Hinblick auf das Verfahren zur Herstellung einer Schichtstruktur ist erfindungsgemäß dadurch gekennzeichnet, daß die metallischen Fasern und/oder Fäden und das eine äußere Oberfläche bildende Blech durch Sintern oder Löten miteinander verbunden werden, bevor die wenigstens eine Schicht aus faserverstärktem Kunststoff und die metallischen Fasern und/oder Fäden mit Bindemittel getränkt werden.

In einer Ausgestaltung werden die metallischen Fasern und/oder Fäden und das Blech im wesentlichen drucklos, d.h. lediglich mit Kontaktdruck, in einer zweigeteilten Form aus beschichtetem Stahl miteinander verbunden, wobei dieses bei einer etwa 10 °C unter ihrer jeweiligen Schmelztemperatur liegenden Temperatur erfolgen kann.

Weitere Ausgestaltungen der Erfindung sind in den Unteransprüchen beschrieben.

Im folgenden wird die Erfindung anhand von Ausführungsbeispielen unter Bezugnahme auf eine Zeichnung näher erläutert. Es zeigt:
- Fig. 1: eine schematische Schnittansicht eines Ausführungsbeispiels einer erfindungsgemäßen Schichtstruktur,
- Fig. 2: eine schematische Schnittansicht eines weiteren Ausführungsbeispiels der erfindungsgemäßen Schichtstruktur,
- Fig. 3: eine schematische Schnittansicht eines dritten Ausführungsbeispiels der erfindungsgemäßen Schichtstruktur,
- Fig. 4: eine schematische Querschnittsansicht einer aus einem Ausführungsbeispiel der erfindungsgemäßen Schichtstruktur aufgebauten Schaufel einer Strömungsmaschine,
- Fig. 5: eine schematische Längsschnittansicht eines gemäß einem weiteren Ausführungsbeispiel der erfindungsgemäßen Schichtstruktur aufgebauten Kolbens,
- Fig. 6: eine schematische und perspektivische Schnittansicht eines gemäß einem alternativen Ausführungsbeispiel der erfindungsgemäßen Schichtstruktur aufgebauten Rohrs,
- Fig. 7: eine schematische Draufsicht auf einen Tragflügel eines Flugzeugs und
- Fig. 8: eine schematische Schnittansicht eines Gehäusebereichs eines Flugzeugs.

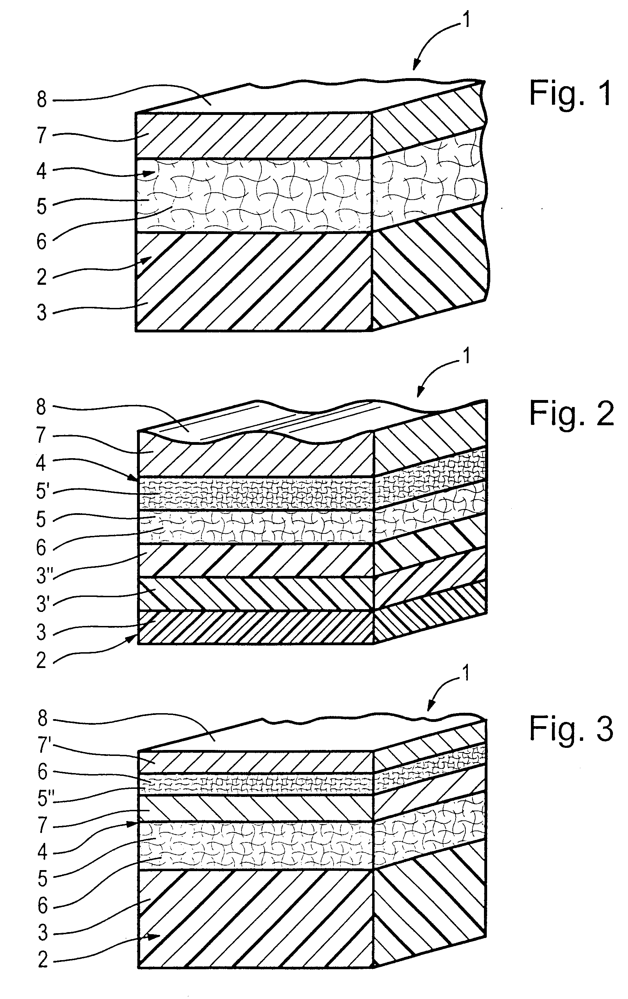

Fig. 1 zeigt ein Ausführungsbeispiel einer im ganzen mit 1 bezeichneten Schichtstruktur, die als Substrat 2 eine Schicht aus faserverstärktem Kunststoff 3 sowie eine Deckschicht 4 umfaßt. Die Deckschicht 4 weist benachbart zu der Schicht aus faserverstärktem Kunststoff 3 eine Schicht 5 aus metallischen Fasern und/oder Fäden 6 mit einer Porosität von etwa 95% sowie ein die Oberfläche 8 der Schichtstruktur 1 bildendes Blech 7 auf. Die metallischen Fasern und/oder Fäden 6 und das Blech 7 bestehen aus demselben Metall und werden bei der Herstellung der Schichtstruktur 1 zunächst durch Sintern bei einer Temperatur von etwa 10 °C unterhalb ihrer Schmelztemperatur fest miteinander verbunden. Die Schicht 5 aus den metallischen Fasern und/oder Fäden 6 weist danach eine ausreichend große Porosität auf, so daß die Deckschicht 4 mit der Schicht aus faserverstärktem Kunststoff 3 durch lagenweises Ablegen in einer Form, anschließendes durchtränken mit einem Bindemittel, wie einem Kunstharz, und abschließendem Aushärten hergestellt werden kann.

In Fig. 2 ist ein weiteres Ausführungsbeispiel einer Schichtstruktur 1 dargestellt, bei der das Substrat 2 aus drei Schichten 3, 3', 3'' aus faserverstärktem Kunststoff besteht, wobei vorliegend Kohlefasern verwendet werden. Jede Schicht 3, 3', 3'' aus faserverstärktem Kunststoff kann filz-, geflecht- und/oder gewebeartig aufgebaut sein.

Ebenso muß die an die äußerste Schicht 3'' aus faserverstärktem Kunststoff anschließende, einen Teil der Deckschicht 4 bildende Schicht 5 aus metallischen Fasern und/oder Fäden 6 nicht unbedingt vollständig aus Filz bestehen. Alternativ oder zusätzlich zu einer Schicht 5 aus Filz können andere Filzarten oder Geflechte oder Gewebe verwendet werden. In dem Ausführungsbeispiel aus Fig. 2 umfaßt der aus metallischen Fasern und/oder Fäden 6 bestehende Teil der Deckschicht 4 zwei Schichten 5, 5', wobei die an das die äußere Oberfläche 8 bildende Blech 7 angrenzende Schicht 5' aus metallischen Fasern und/oder Fäden 6 eine Porosität von etwa 95 % und die an die Schicht 3'' aus faserverstärktem Kunststoff angrenzende Schicht 5 aus metallischen Fasern und/oder Fäden 6 zur verbesserten Einbringung des Bindemittels bzw. Matrixharzes eine größere Porosität aufweist. Sowohl in dem Substrat 2 als auch in den Schichten 5, 5' aus metallischen Fasern und/oder Fäden 6 können weitere, nicht dargestellte Bestandteile zur Verbesserung spezifischer Eigenschaften vorgesehen sein. Die von dem Blech 7 gebildete äußere Oberfläche 8 der Schichtstruktur 1 ist in diesem Ausführungsbeispiel strukturiert, was für einzelne Anwendungen vorteilhaft sein kann.

Fig. 3 zeigt ein alternatives Ausführungsbeipiel einer Schichtstruktur 1, die als Substrat 2 eine einzige Schicht 3 aus faserverstärktem Kunststoff aufweist. Die Deckschicht 4 umfaßt anders als bei den vorgenannten Ausführungsbeispielen ein erstes Blech 7 und ein zweites, die äußere Oberfläche 8 bildendes Blech 7', wobei die beiden Bleche 7, 7' durch eine dazwischen vorgesehene Schicht 5'' aus metallischen Fasern und/oder Fäden 6 durch Sintern verbunden sind. Angrenzend an die Schicht 3 aus faserverstärktem Kunststoff besitzt die Deckschicht 4 zur Verbindung bzw. Verklammerung mit dem Substrat 2 eine weitere Schicht 5 aus metallischen Fasern und/oder Fäden 6. In bestimmten Anwendungen kann die zwischen den beiden Blechen 7, 7' vorgesehene Schicht 5'' aus metallischen Fasern und/oder Fäden 6 von einem Kühlmedium in entsprechend ausgebildeten Leitungen od.dgl. durchströmt werden.

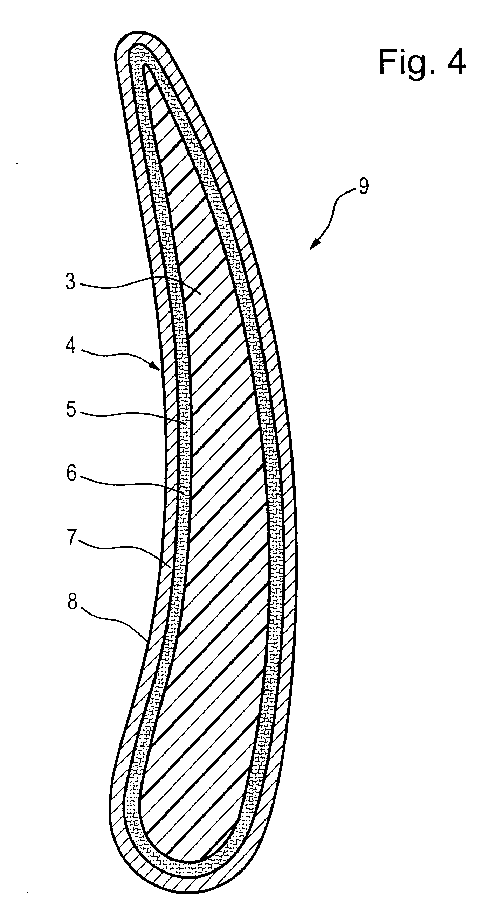

In Fig. 4 ist eine Querschnittsansicht einer im ganzen mit 9 bezeichneten Schaufel für eine Strömungsmaschine, wie z.B. eine Gasturbine, dargestellt, die im wesentlichen aus wenigstens einer Schicht 3 aus faserverstärktem Kunststoff besteht. Die Deckschicht 4 besteht aus einer Schicht 5 aus metallischen Fasern und/oder Fäden 6 und einem damit mittels Sintern verbundenen Blech 7, das aus einer Ni-Basis-Legierung besteht und im wesentlichen die gleiche Schmelztemperatur wie das Material der metallischen Fasern und/oder Fäden 6 besitzt. Beim Einsatz der Schaufel in eine verdichternahe Gasturbine stellt die von dem Blech 7 gebildete äußere Oberfläche 8 einen guten Haftgrund für Funktionsschichten dar, die z.B. durch thermisches Spritzen oder galvanisches Abscheiden auf die Schaufel aufgebracht werden. Das Blech 7 verhindert als geschlossene Fläche insbesondere, daß derartige Funktionsschichten das Bindemittel bzw. Matrixharz der Schicht 3 aus faserverstärktem Kunststoff sowie jener aus metallischen Fasern und/oder Fäden 6 chemisch oder physikalisch angreifen und schädigen können.

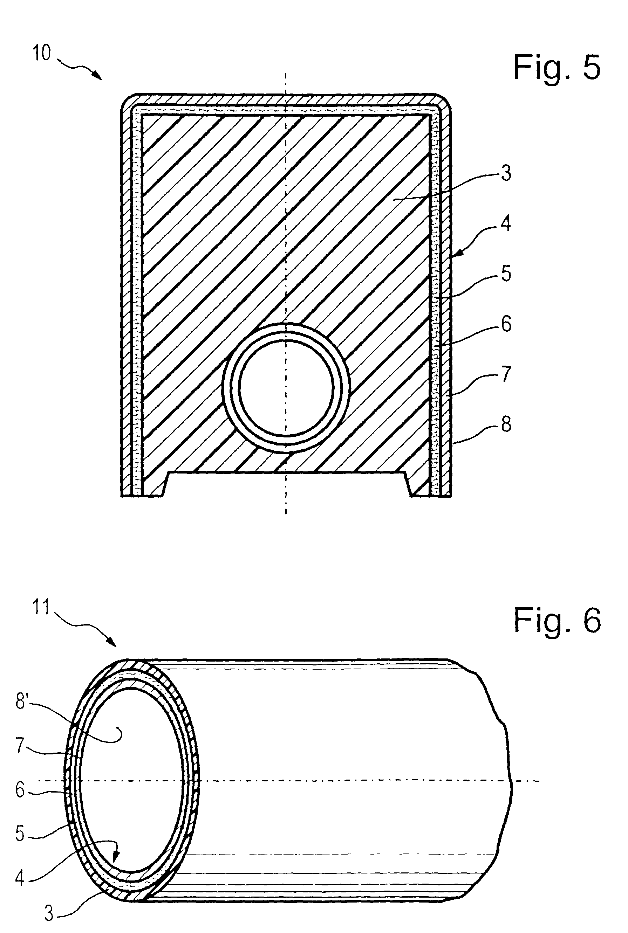

In dem in Fig. 5 gezeigten Ausführungsbeispiel ist ein im ganzen mit 10 bezeichneter Kolben aus der Schichtstruktur 1 aufgebaut, der im wesentlichen aus wenigstens einer Schicht 3 aus faserverstärktem Kunststoff besteht und ein Lagerauge aufweist. Die Deckschicht 4 umgibt im wesentlichen vollständig die von der Mantelfläche des Kolbens 10 sowie seiner wirksamen Stirnfläche gebildete, äußere Oberfläche 8 und besteht aus einer an die Schicht 3 aus faserverstärktem Kunststoff angrenzenden Schicht 5 aus metallischen Fasern und/oder Fäden 6 sowie einem nach außen gewandten Blech 7. Der als Schichtstruktur 1 ausgebildete Kolben 10 hat deutliche Gewichtsvorteile, wobei das Matrixharz für die Schicht aus faserverstärktem Kunststoff 3 und die Schicht 5 aus metallischen Fasern und/oder Fäden 6 durch das äußere Blech 7 gegen Überhitzung od.dgl. geschützt ist.

Fig. 6 zeigt ein Ausführungsbeispiel, bei dem ein im ganzen mit 11 bezeichnetes Rohr aus der Schichtstruktur 1 aufgebaut ist. Das Rohr 11 besteht im wesentlichen aus einer Schicht 3 aus faserverstärktem Kunststoff und weist an seiner inneren Oberfläche 8' eine Deckschicht 4 auf, welche aus einer Schicht 5 aus metallischen Fasern und/oder Fäden 6 und einem Blech 7 besteht, wobei das Blech 7 in diesem Fall die innenliegende, äußere Oberfläche des Rohrs 11 bildet. Bei der Herstellung wird das Blech 7 zunächst mit den mit der Schicht 5 aus metallischen Fasern und/oder Fäden 6 durch Sintern verbunden. Anschließend wird die Schicht 5 aus metallischen Fasern und/oder Fäden 6 ebenso wie die Schicht aus faserverstärktem Kunststoff 3 mit einem Bindemittel getränkt und abschließend unter Ausbildung des festen Rohrs 11 ausgehärtet.

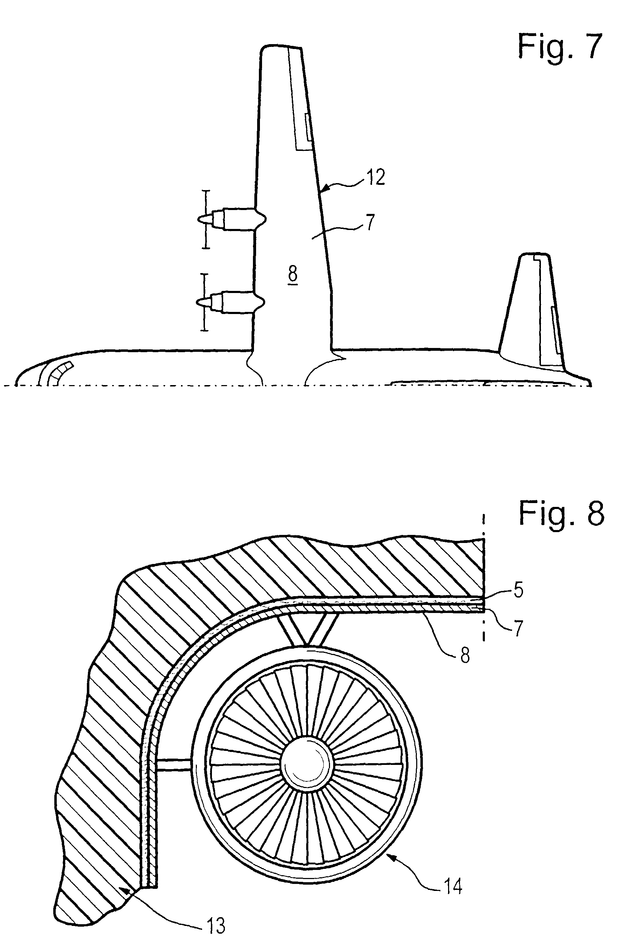

Fig. 7 zeigt eine Draufsicht auf ein Flugzeug, dessen Tragfläche 12 wenigstens abschnittsweise als Schichtstruktur 1 aufgebaut ist. Die Tragfläche 12 besteht im wesentlichen aus Schichten aus verstärkten Kunststoffen 3 und weist eine Deckschicht 4 aus metallischen Fasern und/oder Fäden 6 und einem Blech 7 auf, wobei das Blech 7 die äußere Oberfläche 8 des Tragflügels 11 bildet, als Blitzschutz dient und als Funktionsoberfläche strukturiert sein kann, z.B. mit einer sog. Haifischhaut zur Widerstandsverminderung.

In Fig. 8 ist ein an einem Gehäuse 13 eines nicht weiter dargestellten Flugzeugs montiertes Triebwerk 14 schematisch dargestellt. Das Gehäuse 13 ist als Schichtstruktur aufgebaut und besitzt als äußere Oberfläche 8 ein Blech 7, welches z.B. als Feuerschutz bei Titanfeuer aus dem Triebwerk 14 dient.

Alle Ausführungsbeispiele der Erfindung können eine Deckschicht 4 aus mehreren Schichten 5, 5' etc. aus metallischen Fasern und /oder Fäden 6 aufweisen, deren Porosität zu der Schicht bzw. dem Substrat aus faserverstärktem Kunststoff 3 hin zunimmt.

## Patentansprüche

1. Schichtstruktur, aus wenigstens einer Schicht aus faserverstärktem Kunststoff (3) als Substrat (2) und einer Deckschicht (4), die benachbart zu der Schicht aus faserverstärktem Kunststoff (3) metallische Fasern und/oder Fäden (6) aufweist, wobei die Schicht aus faserverstärktem Kunststoff (3) und die metallischen Fasern und/oder Fäden (6) mit Bindemittel getränkt sind, dadurch gekennzeichnet, dass die Deckschicht (4) wenigstens abschnittsweise ein mit den metallischen Fasern und/oder Fäden (6) verbundenes Blech (7) als äußere Oberfläche (8) aufweist und mehrere Schichten (5) aus metallischen Fasern und/oder Fäden (6) umfasst, deren Porosität zu der Schicht aus faserverstärktem Kunststoff (3) hin zunimmt.

2. Schichtstruktur nach Anspruch 1, dadurch gekennzeichnet, dass das Blech (7) und die metallischen Fasern und/oder Fäden (6) durch Sintern oder Löten miteinander verbunden sind.

3. Schichtstruktur nach Anspruch 1 oder 2, dadurch gekennzeichnet, dass das Blech (7) und die metallischen Fasern und/oder Fäden (6) aus Materialien mit nah beieinanderliegenden Schmelztemperaturen bestehen.

4. Schichtstruktur nach Anspruch 3, dadurch gekennzeichnet, dass die Materialien Legierungen aus Titan oder Stahl oder Nickel sind.

5. Schichtstruktur nach einem oder mehreren der vorhergehenden Ansprüche, dadurch gekennzeichnet, dass die Deckschicht (4) zwei zueinander beabstandete und mit metallischen Fasern und/oder Fäden (6) verbundene Bleche (7,7') aufweist, von denen das äußere Blech (7') die äußere Oberfläche (8) bildet.

6. Schichtstruktur nach Anspruch 5, dadurch gekennzeichnet, dass im Bereich zwischen den Blechen (7, 7') Leitungen für ein Kühlmedium vorgesehen sind.

7. Schichtstruktur nach einem oder mehreren der vorhergehenden Ansprüche, dadurch gekennzeichnet, dass die Schicht aus faserverstärkten Kunststoff (3) und die metallischen Fasern und/oder Fäden (6) mit dem gleichen Bindemittel getränkt und verbunden sind.

8. Schichtstruktur nach einem oder mehreren der vorhergehenden Ansprüche, dadurch gekennzeichnet, dass das Bindemittel Mischpolymerisate aus Kunststioffharz, z.B. Epoxy-, Phenolharze oder Polyimide, enthält.

9. Schichtstruktur nach einem oder mehreren der vorhergehenden Ansprüche, dadurch gekennzeichnet, dass die metallischen Fasern und/oder Fäden (6) als Filz und/oder Geflecht und/oder Gewebe vorliegen.

10. Schichtstruktur nach einem oder mehreren der vorhergehenden Ansprüche, dadurch gekennzeichnet, dass die Deckschicht (4) an mehreren Seiten des Substrats (2) ausgebildet ist, und dass vorzugsweise die Deckschicht (4) das Substrat (2) im wesentlichen vollständig umgibt.

11. Schichtstruktur nach einem oder mehreren der vorhergehenden Ansprüche, gekennzeichent durch eine Ausbildung als Schaufel (9) für eine Strömungsmaschine, die im wesentlichen aus wenigstens einer Schicht aus faserverstärktem Kunststoff (3) besteht und wenigstens abschnittsweise eine Deckschicht (4) aufweist, die benachbart zu der Schicht aus faserverstärktem Kunststoff (3) metallische Fasern und/oder Fäden (6) sowie ein mit diesen verbundenes Blech (7) als äußere Oberfläche (8) aufweist.

12. Schichtstruktur nach einem oder mehreren der Ansprüche 1 bis 10, gekennzeichnet durch die Ausbildung als Kolben (10) für eine Kolbenmaschine, der im wesentlichen aus wenigstens einer Schicht aus faserverstärktem Kunststoff (3) besteht und wenigstens abschnittsweise eine Deckschicht (4) aus einer an die Schicht aus faserverstärktem Kunststoff (3) angrenzenden Schicht (5) aus metallischen Fasern und/oder Fäden (6) und einem Blech (7) als äußere Oberfläche (8) aufweist.

13. Schichtstruktur nach einem oder mehreren der Ansprüche 1 bis 10, gekennzeichnet durch eine Ausbildung als Rohr (11), das im wesentlichen aus einer Schicht aus faserverstärktem Kunststoff (3) besteht und wenigstens abschnittsweise eine Deckschicht (4) aufweist, die benachbart zu der Schicht aus faserverstärktem Kunststoff (3) metallische Fasern und/oder Fäden (6) sowie ein mit diesen verbundenes Blech (7) als nach innen gewandte Oberfläche (8') aufweist.

14. Schichtstruktur nach einem oder mehreren der Ansprüche 1 bis 10, gekennzeichnet durch eine Ausbildung als Bauteil (12,13) eines Flugzeugs.

15. Verfahren zur Herstellung einer Schichtstruktur, mit einem Substrat (2) aus wenigstens einer Schicht aus faserverstärktem Kunststoff (3) und einer Deckschicht (4), die benachbart zu der Schicht aus faserverstärktem Kunststoff (3) metallische Faser und/oder Fäden (6) aufweist, wobei die Schicht aus faserverstärktem Kunststoff (3) und die metallischen Faser und/oder Fäden (6) mit Bindemittel getränkt sind, dadurch gekennzeichnet, dass die metallischen Fasern und/oder Fäden (6) und das eine äußere Oberfläche (8) bildende Blech (7) durch Sintern oder Löten miteinander verbunden werden, bevor die wenigstens eine Schicht aus faserverstärktem Kunststoff (3) und die metallischen Fasern und/oder Fäden (6) mit Bindemittel getränkt werden.

16. Verfahren nach Anspruch 15, dadurch gekennzeichnet, dass die metallischen Fasern und/oder Fäden (6) und das Blech (7) im wesentlichen drucklos miteinander verbunden werden.

17. Verfahren nach Anspruch 15 oder 16, dadurch gekennzeichnet, dass die metallischen Fasern und/oder Fäden (6) und das Blech (7) bei einer etwa 10 °C unter ihren jeweiligen Schmelztemperaturen liegenden Temperatur miteinander verbunden werden.
